Europäisches Patentamt

European Patent Office

Office européen des brevets

(19)

(11) **EP 1 137 572 B1**

(12) **EUROPEAN PATENT SPECIFICATION**

(45) Date of publication and mention
of the grant of the patent:
**06.07.2005 Bulletin 2005/27**

(51) Int Cl.⁷: **B64D 37/32**, B64D 37/06

(21) Application number: **99958348.7**

(86) International application number:
**PCT/GB1999/004035**

(22) Date of filing: **02.12.1999**

(87) International publication number:
**WO 2000/034121 (15.06.2000 Gazette 2000/24)**

(54) **A BAFFLE FOR A LIQUID TANK**

BLENDENANORDNUNG FÜR EINEN FLÜSSIGKEITSTANK

DEFLECTEUR POUR CITERNE A LIQUIDE

(84) Designated Contracting States:
**AT BE CH CY DE DK ES FI FR GB GR IE IT LI LU
MC NL PT SE**

(30) Priority: **09.12.1998 GB 9826936**

(43) Date of publication of application:
**04.10.2001 Bulletin 2001/40**

(73) Proprietor: **BAE Systems PLC
London SW1Y 5AD (GB)**

(72) Inventors:
 • **TOWNSEND, David British Aerospace Plc
Avon BS12 7QW (GB)**
 • **ZAVTRAK, Serguei Timofeevich
Auckland (NZ)**
 • **MCEWEN, Rognvald Sutherland
British Aerospace Plc
Avon BS12 7QW (GB)**

(74) Representative: **Mukherjee, Aniruddha et al
BAE Systems plc
Group Intellectual Property Dept.
Lancaster House - P.O. Box 87
Farnborough Aerospace Centre
Farnborough, Hampshire GU14 6YU (GB)**

(56) References cited:
**EP-A- 0 689 991        FR-A- 746 625
US-A- 4 615 455**

## EP 1 137 572 B1

**Description**

This invention relates to a baffle unit for location in a tank for liquid, which baffle unit is operable to reduce hydraulic ram pressure in the liquid resulting from impact of a projectile with an external surface of the tank, and to a tank containing such a baffle unit.

A high speed projectile on impact with and penetration into a liquid containing tank generates very high pressure in the liquid which propagates as intense shockwaves producing hydraulic ram pressure in the liquid. The shockwaves and resulting hydraulic ram pressure in the liquid, combined with the penetration damage from the projectile, can cause damage to the tank structure and frequently are the cause of catastrophic failure of the tank. The hydraulic ram pressure pulses are intense but of short duration and propagate through the liquid in the tank.

EP-A1-0,689,991 discloses an earlier proposal for addressing this problem based upon the use of a compressible gas located within a fuel tank. In EP-A1-0,689,991, it is proposed to use a volume of gas as energy absorbing or dissipating means with the volume of gas being confined to a single pocket adjacent an outer wall of a reservoir, or within the reservoir, or dispersed randomly in the form of small spheres or confined to the cellular pores of a reticulated foam. Where the volume of gas is within the reservoir, the volume of gas will not be static and can 'float' within the reservoir, as subsequent testing has revealed, with the result that the effect of the volume of the gas is variable in absorbing or dissipating any shockwave resulting from impact of a high velocity projectile. The unpredictability of such an arrangement could be disastrous, if, for example, the reservoir is a fuel tank in the wing of an aircraft. The resilience of the gas ensures that any shockwave is at least partially absorbed.

US 4,615,455 discloses a fuel tank containing a honeycomb sponge that occupies the entire internal volume of the tank: rather than the sponge being present to absorb shockwaves, it is included to soak up fuel thereby reducing fuel leakage from the tank should the tank ever be ruptured.

There is thus a need for means for reducing hydraulic ram pressure in the liquid in such a tank and for a generally improved tank which has an improved ability to sustain projectile impact without catastrophic failure.

According to a first aspect of the present invention, there is provided a tank for containing a liquid, the tank being capable of baffling hydraulic ram pressure in the liquid resulting from a shockwave caused by impact of a projectile with an external surface of the tank, characterised in that the tank has provided therein an array comprising a plurality of baffle units mounted in the tank in spaced apart substantially parallel overlying relationship, each baffle unit including at least two spaced apart walls defining a cavity therebetween, which cavity contains a compressible gaseous material, the walls of each baffle unit being sufficiently strong to contain the gaseous material and to resist the hydrostatic pressure of the liquid contained in the tank in use, and being spaced apart to define a cavity volume such that, in use, when the tank is impacted by a projectile, the energy from the resulting shockwave is absorbed by expansion of the liquid into the space created by the compression of a baffle unit so that a shockwave or shockwaves resulting from compression of liquid, when in the tank, resulting from an impact of a projectile on an external surface of the tank, impinges on at least one of the outer walls of the or each baffle unit, and so that a shockwave or shockwaves interact with the or each baffle unit before impinging on the tank external surfaces, and the gaseous material having a density sufficiently different from the density of the liquid in the tank to provide substantially total reflection within the or each unit of the shockwave or shockwaves impinging thereon.

The present invention also provides a baffle unit for reducing hydraulic ram pressures in a liquid tank, when the baffle unit is located in the liquid in the tank, where the hydraulic ram pressure results from impact of a projectile with an external surface of the tank, the unit being characterised by at least two outer like walls which are held in spaced apart relationship to define therebetween at least one cavity, and a compressible gas or gaseous mixture at reduced, atmospheric or enhanced pressure, contained in the cavity, with said outer walls being sufficiently strong to withstand the pressure of the gas or gaseous material contained in the at least one cavity and to resist the hydrostatic pressure of liquid in a tank, when the baffle unit is located in the liquid in the tank, the outer walls being spaced apart by a honeycomb structure by an amount sufficient to provide the at least one cavity with a volume sufficient to allow a shockwave or shockwaves in the liquid, resulting from compression of the liquid by impact of a projectile on the tank external surface and thus on the liquid, to be reduced by expansion of the compressed liquid into the cavity volume thereby to reduce the hydraulic ram pressure in the liquid, and with the gas or gaseous mixture having a density sufficiently different from the density of the liquid to provide substantially total reflection within the baffle unit of the shockwave or shockwaves impinging on the baffle unit, thereby to reduce the hydraulic ram pressure in the liquid.

The present invention further provides a baffle structure for reducing hydraulic ram pressure in a liquid in a tank, when the baffle structure is mounted in the liquid in the tank, where the hydraulic ram pressure results from impact of a projectile with an external surface of the tank, the baffle structure comprising at least one baffle unit according to the invention, and a mounting for mounting said at least one baffle unit in spaced relationship to a wall of said tank.

Each baffle unit is advantageously designed to be irreversibly compressible subsequent to impact of a projectile on an outer wall thereof.

Preferably, the outer walls are made of a polymeric material.

2

Advantageously, the gas or gaseous material utilised is air and, optionally, in use, the liquid contained in the tank is either water or liquid petroleum fuel.

Preferably, the tank is such that the total cavity volume of the baffle unit or units in the tank is up to 10% by volume of the tank volume.

For a better understanding of the present invention, and to show how the same may be carried into effect, reference will now be made, by way of example, to the accompanying drawings in which:-

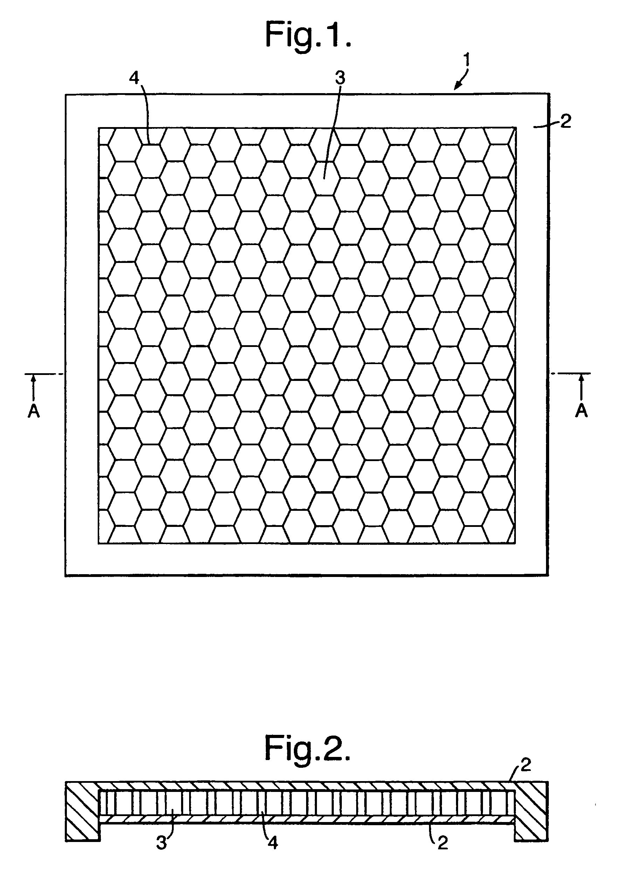

Figure 1 is a plan view of a baffle unit according to one embodiment of the present invention,

Figure 2 is a cross sectional view through the baffle unit of Figure 1 taken on the line A-A in Figure 1,

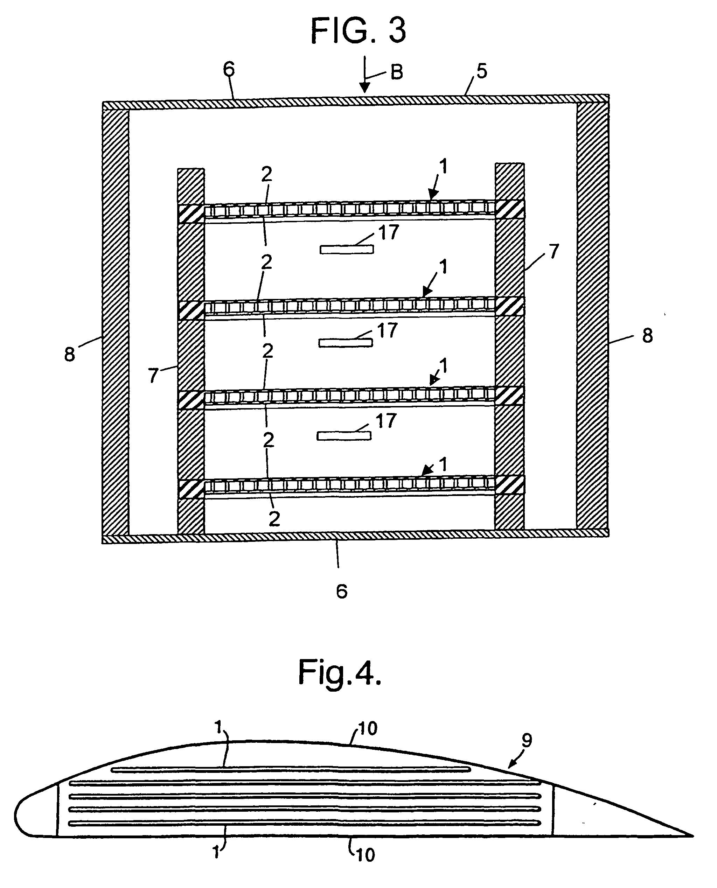

Figure 3 is a vertical cross sectional view through a tank according to a further embodiment of the present invention shown including a baffle unit structure according to the present invention,

Figure 4 is a cross sectional diagrammatic view through a wing tank according to a further embodiment of the present invention,

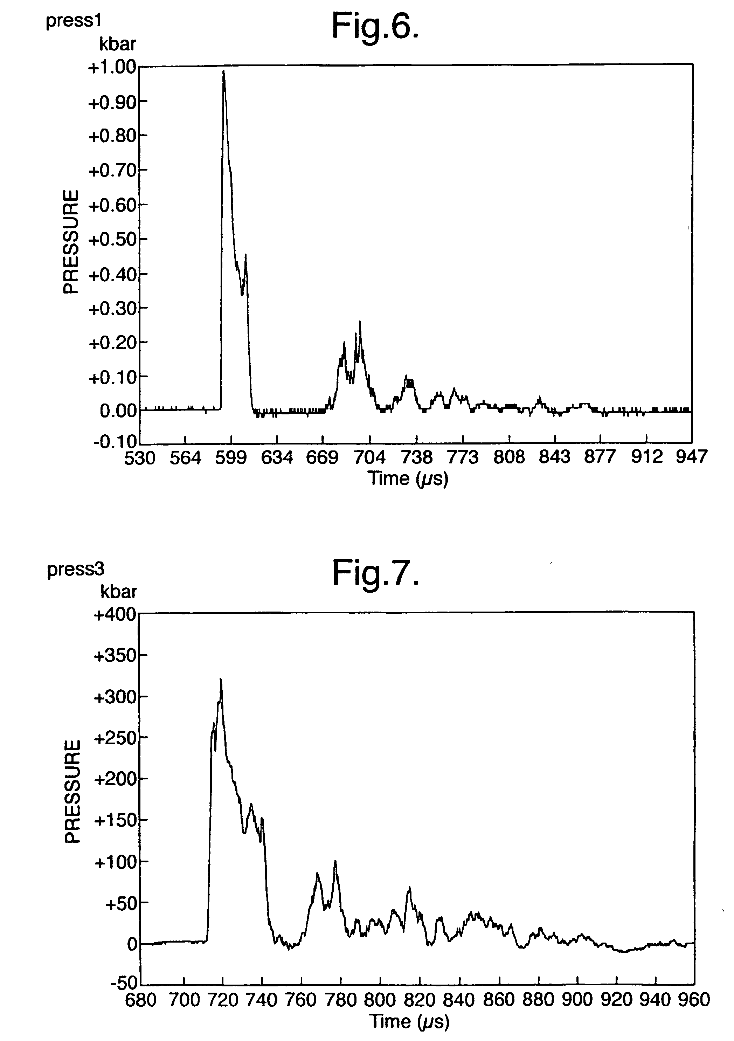

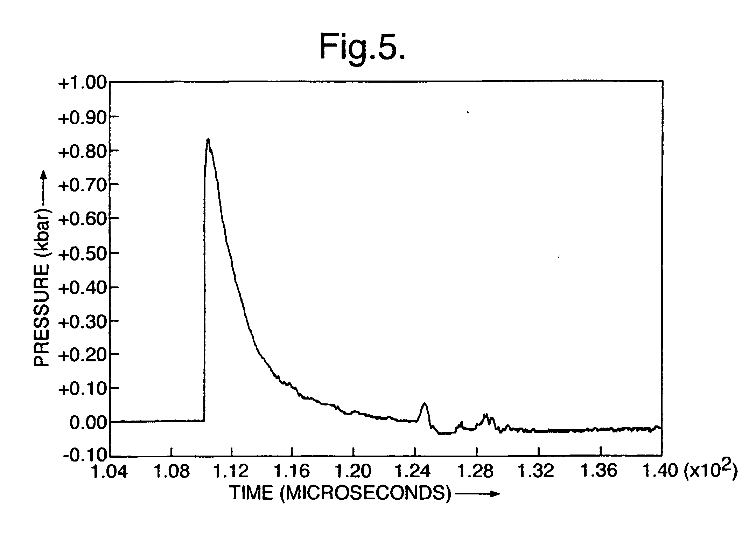

Figure 5 is a graphical plot of the shockwave pressure against time for a high speed projectile impact into a water filled tank at a velocity of 2009 meters per second,

Figure 6 is a graphical plot of shockwave pressure against time for a high speed projectile impact into a water filled tank according to the present invention containing four baffle unit according to the present invention having cavities under reduced pressure measured via a sensor located approximately 100 millimetres from the impact point and between the first and second baffle units,

Figure 7 is a graphical representation of shockwave pressure against time for impact of a high speed projectile into a water filled tank according to the present invention containing four reduced pressure cavity baffle units according to the present invention with the pressure sensor being located in the tank approximately 210 millimetres from the impact point and between the third and fourth baffle units,

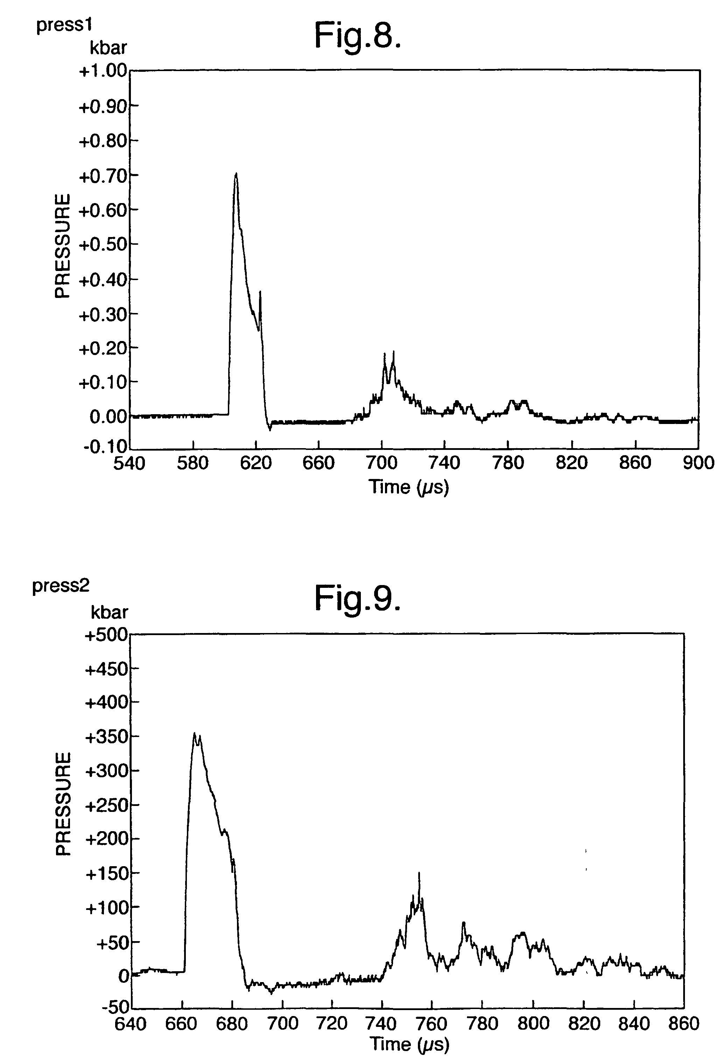

Figure 8 is a graphical plot of hydraulic pressure against time for impact of a high speed projectile into a water filled tank according to the present invention containing four baffle units according to the present invention whose cavities are at atmospheric pressure, with the pressure sensor being located approximately 100 millimetres from the impact point in the water and between the first and second baffle units,

Figure 9 is a graphical plot of hydraulic pressure against time for the impact of a high speed projectile into a water filled tank according to the present invention containing four baffle units according to the present invention whose cavities are at atmospheric pressure, with the pressure sensor being located in the water in the tank approximately 155 millimetres from the impact point and between the second and third baffle units,

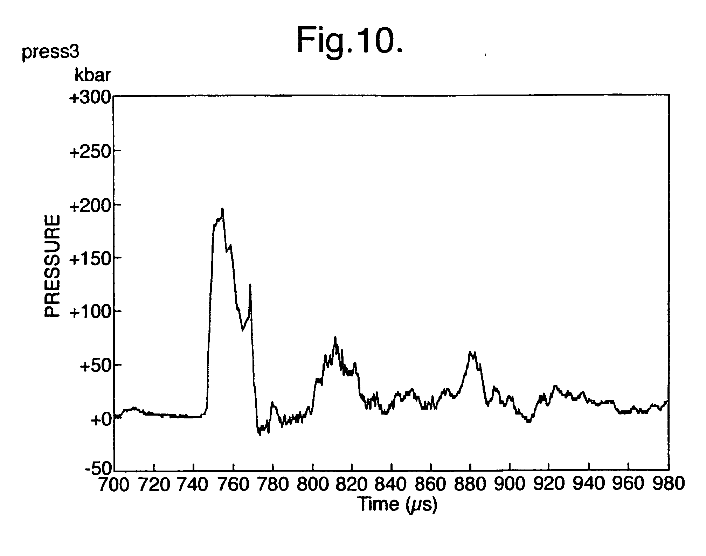

Figure 10 is a graphical plot of hydraulic pressure against time for the impact of a high speed projectile into a water filled tank according to the present invention containing four baffle units according to the present invention whose cavities are at atmospheric pressure, with the pressure sensor being located in the water in the tank approximately 210 millimetres from the impact point and between the third and fourth baffle units,

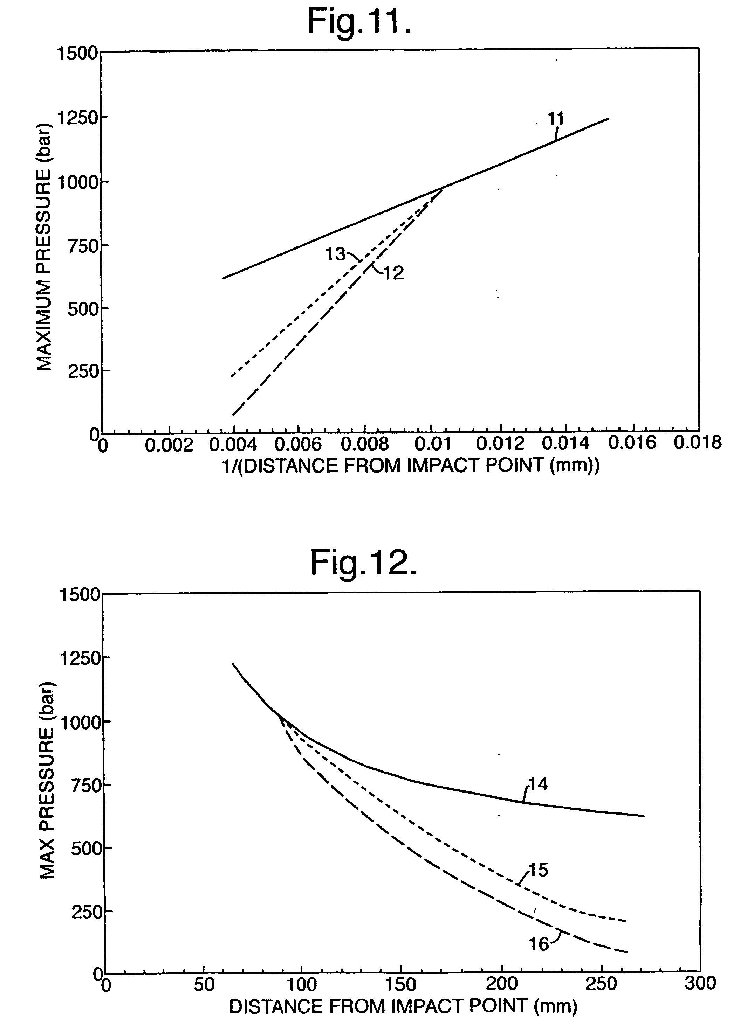

Figure 11 is a graphical plot of maximum shock pressure in bars against the reciprocal of the distance from impact point in millimetres for the impact of a high speed projectile into a water filled tank according to the present invention containing four baffle units according to the present invention contrasted with results for a baffle-less water filled tank not according to the present invention, and

Figure 12 is a graphical representation of maximum shock pressure in bars against the radial distance from the impact point in millimetres for a high speed projectile into a water filled tank according to the present invention containing four baffle units according to the present invention, contrasted with results for a baffle-less water filled tank not according to the present invention.

As shown in Figures 1 and 2 of the present invention, a baffle unit 1 according to a first embodiment of the present invention includes at least two outer walls 2 which are held in spaced apart relationship to define therebetween at least one cavity 3. The baffle unit includes a compressible gas or gaseous mixture such as air at reduced, atmospheric or enhanced, pressure contained in the or each cavity 3. In the embodiment of the invention illustrated in Figures 1 and 2, the baffle unit 1 includes a honeycomb structure 4 contained in and subdividing the at least one cavity 3 and serves to maintain the opposed outer walls 2 in spaced apart, substantially parallel relationship. The honeycomb structure 4 is made from any convenient material such as a plastics material. A suitable material is an aromatic nylon polymer such as manufactured under the name NOMEX (Trade Mark). The outer walls 2 preferably are made of a suitable polymeric material.

The baffle unit 1 is intended for location in a liquid such as water or liquid petroleum fuel in a tank 5 and is operable to reduce hydraulic ram pressure in the liquid in the tank 5 resulting from impact of a projectile (not shown) with an external surface 6 of the tank 5. As shown in Figure 3, in a baffle structure 12 provided in tank 5 there are preferably four baffle units 1 located in the tank 5 in spaced apart substantially parallel overlying array in any convenient manner such as by means of locating spacer walls 7. The baffle unit 1a that is closest to the lowermost end wall of the tank 5 is spaced therefrom by a mounting 13 forming part of the baffle structure 12. The baffle unit walls 2 are sufficiently strong to withstand the pressure of the gas or gaseous material contained in the cavity 3 and are spaced apart in each baffle unit by an amount sufficient to provide at least one cavity 3 with a volume sufficient to allow a shockwave or shockwaves in the liquid in the tank 5, resulting from compression of the liquid by impact of a projectile on the tank external surface 6 and thus in the liquid, to be reduced by expansion of the compressed liquid into the cavity volume, thereby to reduce the hydraulic ram pressure in the liquid in the tank. Additionally, the gas or gaseous mixture in the or each cavity 3 has a density sufficiently different from the density of the liquid in the tank 5 to provide substantially total reflection within the baffle unit 1 of the shockwave or shockwaves impinging on the baffle unit 1 thereby to reduce the hydraulic ram pressure in the liquid in the tank.

In the tank embodiment of the invention shown in Figure 3, each of the baffle units 1 may contain gas or gaseous material under reduced pressure or under atmospheric pressure. Preferably the gaseous material is air. The tank 5 as shown in Figure 3 has side walls 8. Pressure transducers 17 are located as shown in Figure 3 between the baffle units 1 closest to the direction of impact B of a projectile on the external surface 6 of the tank 5. The transducers 17 measure the change of pressure consequent upon a shockwave propagating through the tank 5 following projectile impact on surface 6 in the direction B.

A tank according to a further embodiment of the present invention is shown in Figure 4 in the form of an aircraft wing tank 9 with the outer skin of the wing providing the external surface 10 of the tank 9. In this embodiment the tank contains five baffle units 1 according to the present invention in overlying substantially parallel spaced apart array.

The total cavity volume of the or each baffle unit 1 in the tank 5 or 9 is up to 10% by volume of the tank volume. Additionally, the or each baffle unit 1 is located in the tank 5 or 9 so that a shockwave or shockwaves resulting from compression of the liquid in the tank resulting from impact of a projectile on the external surface 6 or 10 impinges on at least one of the outer walls 2 of the or each baffle unit and so that the shockwave or shockwaves interact with the or each baffle unit 1 before impinging on the tank external surfaces.

The baffle units 1 or a completed baffle structure will be placed in the tank 5, 9 such that the shock pulse will impinge on the adjacent baffle unit before reaching a tank wall (see Figure 2). In defeating the hydraulic ram pressure the baffle units serve two functions. Firstly, energy from the hydraulic ram shockwave is absorbed by expansion of the liquid into the space created by irreversible compression of the baffle unit. Secondly, each baffle unit, due to the large shock impedance mismatch between the baffle unit and the liquid in the tank, behaves as a good shockwave reflector and a poor shockwave transmitter. Through multiple shockwave reflections in the tank and the attenuation properties of the liquid, the shockwave amplitude is reduced and consequently the pressure experienced by the tank structure is diminished.

Tests were performed to evaluate the performance and function of the internal baffle units. In the first instances a series of control tests were undertaken effectively to establish baseline parameters against which the alleviation characteristics of the baffle unit could be quantitatively evaluated. For these tests two steel framed tanks having skins of aluminium alloy 2014A were used. Aluminium Alloy 2014A contains by weight, from 0.5 to 0.9% silicon, up to 0.5% iron, from 3.9 to 5.0% copper, from 0.4 to 1.2% manganese, from 0.2 to 0.8% magnesium, up to 0.1 % chromium, up to 0.1 % nickel, up to 0.25% zinc, and up to 0.2% titanium plus zirconium, with balance, apart from impurities and incidental constituents, being aluminium. The first of these internal dimensions 535mm x 205mm x 250mm, with transparent sides was also used to permit visualisation of the shock processes occurring in the fluid. The projectile used for this study was a 7 gramme hardened steel cube. Tests were performed at projectile velocities between 1800m/s and 2100 m/s. In all tests, the projectile impact was at the centre of the large external surface 6 of the tank 5 at normal incidence. A number of diagnostic techniques have been employed to provide detailed quantitative data. Principally these are determination of the shock pressure in the liquid, observation of the shockwave using high speed photography, projected velocity measurement and examination of the damage to the tank structure, in particular the exist surface of the tank.

In the control tests, performed without baffle units in the tank, the shock pressures as a function of time at various locations within the tank were recorded for a number of tests. A typical example of the shock pressure as a function of time is given in Figure 5. The shockwave pressure profile has a fast leading edge to a maximum pressure followed by a slower smooth decay and [are/is] characterised by a pulse width of approximately 40 μs. The maximum pressure observed and pulse width are dependent upon the projectile velocity and location of a pressure sensor in the tank relative to the impact point. (Subsequent tests have shown that projectile size and mass also affect the shock pressure profile). The shock warp pressure decreases as the distance from the impact point increases due to dispersion and decay processes. High speed photographic images of the propagating shock further emphasise the well defined spherical shock front ahead of the projectile. As the projectile passes through the liquid, a cavity is formed to the rear of the projectile. This initially expands due to acceleration of the liquid and at a later time collapses as release waves return from the tank walls. The high pressure associated with the shockwave causes extensive deformation of the rear tank wall surface. This damage is further enhanced by the projectile penetration of the rear wall which causes extensive "petalling" failure of the exist skin of the tank.

Tests performed with baffle units, according to the present invention located in the tank, using the same mass of projectile and velocity as above, produced the following results. In the test example quoted, four baffle units were utilised with equal spacing between them, the last baffle unit being approximately 20 mm from the exist skin of the tank, and in an orientation such that the plane of the baffle unit 1 was normal to the velocity vector of the projectile. The baffle units had an area of approximately 200mm x 200mm and total thickness of 6mm. The shock pressure - time profiles obtained at various tank locations are shown in Figures 6 to 10. By comparison with those obtained in the non-inventive tank test, Figure 5, it is evident that the shockwave is disrupted. A fast rise time is still observed, but the smooth decay of the pulse is disrupted. The structure observed in the decay of the pulse is related to the number of baffle units penetrated by the projectile and in the path of the shockwave. In addition, the shock pulse width is rescued. More significantly, the peak shock pressure is less than for the baffle free tank results shown in Figures 11 and 12 which will be discussed later. The reduction in shock pressure becoming greater as the shockwave impinges upon more baffle units. Pressure reductions of a factor of five compared to the control tests have been observed.

Figure 11 shows at line 11 the pressure change with reciprocal of distance from impact for a baffle less water filled tank not according to the invention. Line 12 shows pressure change for a baffle unit containing water filled tank of the invention in which the baffle units contain a vacuum and line 13 shows the pressure change for baffle units containing air. It can be seen that the presence of baffle units considerably reduces the maximum shock pressure in the tank on impact by a projectile. The effect is similar for both vacuum and air containing baffle units.

Figure 12 shows at line 14 the pressure change with distance from impact for a baffle less water filled tank not according to the invention. Line 15 shows a pressure change for a baffle-unit-containing water filled tank of the invention in which the baffle units have plastics material walls and are air containing. Line 16 shows the pressure change for plastics material baffle units containing a vacuum. Once again it can be seen that the presence of the baffle units in the tank considerably reduces the maximum shock pressure in the tank on impact by a projectile.

High speed photographic images of the shockwave propagation show the processes occurring. In the first instance the shockwave forms ahead of the projectile as in the "baffle free tank" test. As the shockwave propagates through the tank it impinges upon a baffle unit. The baffle unit presents a barrier to the propagation of the shock due to the large difference in shock impedance. Reflection of the shockwave occurs quickly followed by cavitation of the liquid. The projectile continues to travel across the tank and penetrates the baffle unit. As the projectile [exists] the baffle unit a shockwave is formed which moves ahead of the projectile. This shock continues to propagate until it reaches the next baffle unit. Again, due to the difference in impedance between the baffle unit and the liquid, the shockwave is reflected and the process is repeated. As a consequence of perforating a number of baffle units 1, in this case four, the shock pressure is diminished and hence the damage sustained by the tank structure is decreased. The rear tank wall of the baffle-unit-containing tank does not show the extensive deformation and petalling type failure observed previously. The only damage sustained by the rear tank wall is a small perforation hole and bulge produced by the projectile as it passes through, During pressure reduction process the baffle units are irreversibly compressed and depending on the materials used for construction suffer extensive damage.

The operating principle of the baffle unit 1 relies on two mechanisms. Firstly, energy is absorbed from the shockwave by allowing the liquid to expand through irreversible compression of the baffle units 1. Secondly, the baffle units present a high impedance to the propagating shockwave causing reflection of the wave.

The operating principle of energy absorption from the shockwave is such that the baffle unit should collapse on a timescale which is comparable with the shock pulse duration. This consideration determines the thickness of the baffle unit. For example, consider a shock pulse of duration tp and pressure P. Simple shockwave analysis shows that the velocity of collapse of the baffle unit wall, V., is given by:-

$$V = \frac{2P}{p_f c_f} \tag{1}$$

where $p_f$ and $c_f$ are the density and shock velocity of the liquid respectively

Hence the time for collapse, $\Delta t$ , is approximately

$$\Delta t \sim \frac{h}{V} \qquad (2)$$

where h is the thickness of the baffle unit in the direction of collapse.

For high speed projectile impacts typical of bullets and missile fragments h is of the order of a few millimetres. Baffle units which are too thin will totally collapse during part of the shock pulse providing a shock path for the remainder of the pulse to continue without reflection or absorption of energy. To permit ready compression, the baffle unit should contain air at enhanced pressure, atmospheric pressure or less. Test results have shown that vacuum baffle units ($10^{-3}$ bar) and baffle units at atmospheric pressure function successfully. Tests show that the volume required is approximately 10% (or less) of the tank volume.

The shockwave reflection characteristics of the baffle unit 1 are characterised by well known shockwave transmission and reflection characteristics. A shockwave on encountering a change in shock impedance such as between two different materials, produces a reflected wave into the original medium and forward travelling transmitted wave. The amplitudes of the transmitted and reflected wave are given as follows:-

Transmission

$$P_t = P_i \frac{2Z_2}{Z_1 + Z_2} \qquad (3)$$

Reflection

$$P_r = P_i \frac{Z_2 - Z_1}{Z_1 + Z_2} \qquad (4)$$

where $P_i$ is the incident shock pressure, $P_t$ the transmitted shock pressure, $P_r$ the reflected shock pressure and $Z_1$ and $Z_2$ are the shock impedances of the first and second materials respectively.

As the shock propagates through the liquid and hits the baffle reflection and transmission of the shock will occur as dictated by the above equations. For air filled and vacuum baffle units $Z_1 \gg Z_2$, hence no shock pulse is transmitted through the baffle unit providing a space is maintained between the walls of the baffle unit. Once the walls of the baffle unit are in intimate contact, $Z_2 = Z_1$ and the shock pulse can propagate. In addition, on perforation of the baffle unit by the projectile a second shock will be generated which must be reduced by further baffle units ahead of the propagating shock. It will also be used that a reflected shock pulse is formed of magnitude equal to the incident shock, but of opposite sign. This tensile reflected wave acts to unload the incident shock and subsequently produce cavitation in the fluid.

The use and design of the baffle units must follow the following basic principles. The position of the baffle units within the tank must be such that the shock impinges on the outer wall 2 of the baffle unit producing collapse of the baffle unit through the thickness. Furthermore the baffle units should be placed such that the shockwave produced by the event interacts with the baffle unit before impinging upon the tank structure. The area of the baffle unit 1 should, therefore, be comparable with the cross sectional area of the tank 5. An important consideration in positioning the baffle units is to provide distributed compressibility homogeneously throughout the tank. A number of baffle units 1 should be employed over a distance comparable with the effective pulse length in the liquid. A schematic showing possible baffle unit placement in a wing tank is given in Figure 4.

As the shockwave propagates through the liquid containing the baffle units, it performs irreversible work compressing the baffle units and consequently loses energy.

Initially consider the whole system of the fluid and baffle units. The energetic balance may be represented as follows:-

$$P(V_{oo}-V)=U_g+U_1+T+\Delta Q \qquad (5)$$

where P is the shock pressure, $V_{oo}$ the initial volume of the system, T kinetic energy and $\Delta Q$ heat generated in

the system. $U_1$ and $U_g$ are the potential energies of the compressed liquid and gas respectively.

The energy lost by the shockwave in compressing the baffle units may be represented as

$$dW = f_c P\tau dV \qquad (6)$$

where $\tau$ is the volume fraction of the baffle units compared to the liquid, $f_c$ is a factor representing the degree of compression of the baffle units and has a value of $\frac{1}{2} < f_c < 1$ and dV is the volume element of the shockwave.

To simplify the calculations, assume the ideal case in which the baffle units are compressed to practically zero volume, hence $f_c = 1$. $dV = 4\pi r^2\, dr = 4\pi r^2\, c_L\, dt$ is the volume the shockwave takes and $c_L$ is the velocity of the shockwave which for simplicity is constant and equal to the sound velocity in the pure liquid.

Clearly, to reduce the energy of the shockwave to such a level that it will cause no damage to the tank structure, the energy lost by the shockwave in compressing the baffle units must be approximately equal to the initial energy of the shockwave.

In the first approximation, the shockwave may be represented as a spherical one of the form:-

$$P = \frac{A}{r}\exp(-t / t_o) \qquad (7)$$

where r is the distance from the impact or shockwave source, A is the shockwave amplitude and $t_o$ defines the shock pulse duration. The energy of the shockwave is thus given by:-

$$E_{sh} = \int_0^\infty \frac{P^2}{\rho_L c_L^2} 4\pi r^2 c_L\, dt = \frac{2\pi A^2 (c_L t_0)}{\rho_L c_L^2} \quad \cdots \quad (8)$$

where $\rho_L$ is the density of the liquid and $c_L$ is the shockwave velocity.

As the projectile propagates through the liquid, its velocity and hence kinetic energy reduce very quickly. To a good approximation, it is assumed that the kinetic energy of the projectile is transformed in to shockwave energy. Hence:-

$$T_p = \frac{m_p V_p^2}{2} \qquad (9)$$

where $T_p$ is the kinetic energy of the projectile, $m_p$ is the mass of the projectile and $V_p$ is the velocity of the projectile, and consequently from equation (8):-

$$A = \sqrt{\frac{T_p\, \rho_L c_L^2}{2\pi (c_L t_0)}} \qquad (10)$$

Comparing the energy lost by the shockwave in compressing the baffle units (equation 6) with the shockwave energy (equation 8) we have:-

$$-dW = dE_{sh} = \frac{4\pi A dA}{\rho_L c_L^2} (c_L t_0) \qquad (11)$$

Noting that the time for collapse of the baffle units is comparable to the shock pulse duration i.e. t = to and consequently exp $(-t/t_0) = 0.37$. Using (6) and (10), the differential equation (11) can be rewritten as:-

$$\frac{dA}{dr} = -\frac{0.37\,\tau\rho_L c_L}{t_0}\,r \qquad\qquad (12)$$

The solution of this equation is of the form:-

$$A = A_0 - \frac{0.37\;\tau\rho_L c_L}{2t_0}\,r^2 \qquad\qquad (13)$$

where $A_0$ is the initial amplitude of the shockwave. Assuming A=0, a critical distance can be found at which the shock pressure decreases to practically zero.

$$r_{cr} = \sqrt{\frac{2A_0 t_0}{0.37\;\rho_L c_L \tau}} \qquad\qquad (14)$$

For example, for $\tau$ = 10% and $A_0$ = $2*10^7$ N/m and to = 40µs (typical parameters from tests performed), the critical radius for effective extinction of the shockwave is approximately $R_{cr} \approx$ 17cm. Clearly, this simple estimate for $r_{cr}$ is optimistic because it has been assumed that all the baffle units are compressed instantly and completely. It should be noted that this analysis does not take into account the shock reflection characteristics of the baffle unit which would tend to further reduce the critical radius. In simple tests, the shock energy was dissipated over a distance of approximately 25cm. Further tests are required with effectively smaller volume fractions of baffle units to fully test this simple analysis. Taking the experimental observation of shockwave extinction over a distance of 25cm, and using the parameters of $A_o$ and $t_o$ given above, potentially, $\tau$ could be reduced to 5%.

In spite of the limitations of this analysis, it does provide a simple relation between shock parameters and the physical dimensions of the baffle system which has been shown to be in agreement with experimental observations.

## Claims

1.  A tank (5,9) for containing a liquid, the tank being capable of baffling hydraulic ram pressure in the liquid resulting from a shockwave caused by impact of a projectile with an external surface (6, 10) of the tank, **characterised in that** the tank has provided therein an array comprising a plurality of baffle units (1) mounted in the tank in spaced apart substantially parallel overlying relationship, each baffle unit including at least two spaced apart walls (2) defining a cavity (3) therebetween, which cavity contains a compressible gaseous material, the walls (2) of each baffle unit being sufficiently strong to contain the gaseous material and to resist the hydrostatic pressure of the liquid contained in the tank in use, and being spaced apart to define a cavity volume such that, in use, when the tank is impacted by a projectile, the energy from the resulting shockwave is absorbed by expansion of the liquid into the space created by the compression of a baffle unit (1) so that a shockwave or shockwaves resulting from compression of liquid, when in the tank, resulting from an impact of a projectile on an external surface of the tank, impinges on at least one of the outer walls (2) of the or each baffle unit (1), and so that a shockwave or shockwaves interact with the or each baffle unit (1) before impinging on the tank external surfaces, and the gaseous material having a density sufficiently different from the density of the liquid in the tank to provide substantially total reflection within the or each baffle unit of the shockwave or shockwaves impinging thereon.

2.  A tank according to claim 1, wherein the outer walls (2) of each baffle unit (1) are made of a polymeric material.

3.  A tank according to any one of claims 1 to 2, including a honeycomb structure (4) contained in and sub-dividing the at least one cavity.

4.  A tank according to any one of claims 1 to 3, wherein the gas or gaseous material utilised is air.

5.  A tank according to any of claims 1 to 4, wherein in use the liquid contained in the tank (5,9) is either water or liquid petroleum fuel.

6.  A tank according to any one of claims 1 to 5, wherein the total cavity volume of each baffle unit (1) in the tank is up to 10% by volume of the tank volume.

7. A baffle unit (1) for reducing hydraulic ram pressures in a liquid in a tank (5,9), when the baffle unit (1) is located in the liquid in the tank (5,9), where the hydraulic ram pressure results from impact of a projectile with an external surface of the tank, the baffle unit (1) being **characterised by** at least two outer like walls (2) which are held in spaced apart relationship by a honeycomb structure to define therebetween at least one cavity (3), and a compressible gas or gaseous mixture at reduced, atmospheric or enhanced pressure, contained in the cavity, with said outer walls (2) being sufficiently strong to withstand the pressure of the gas or gaseous material contained in the at least one cavity (3) and to resist the hydrostatic pressure of liquid in a tank, when the baffle unit (1) is located in the liquid in the tank, the outer walls (2) being spaced apart by an amount sufficient to provide the at least one cavity (3) with a volume sufficient to allow a shockwave or shockwaves in the liquid, resulting from compression of the liquid by impact of a projectile on the tank external surface and thus on the liquid, to be reduced by expansion of the compressed liquid into the cavity volume thereby to reduce the hydraulic ram pressure in the liquid, and with the gas or gaseous mixture having a density sufficiently different from the density of the liquid to provide substantially total reflection within the baffle unit (1) of the shockwave or shockwaves impinging on the baffle unit (1), thereby to reduce the hydraulic ram pressure in the liquid.

8. A baffle unit according to claim 7, wherein the baffle unit outer walls (2) are made of a polymeric material.

9. A baffle unit according to either one of claims 7 and 8, wherein the gas or gaseous materials utilised is air.

10. A baffle structure for reducing hydraulic ram pressure in a liquid in a tank (5,9), when the baffle structure is mounted in the liquid in the tank, where the hydraulic ram pressure results from impact of a projectile with an external surface of the tank, the baffle structure comprising at least one baffle unit (1) according to any one of claims 7 to 9, and a mounting (7) for mounting said at least one baffle unit in spaced relationship to a wall of said tank.

11. A baffle structure according to claim 10 and comprising a plurality of said baffle units (1), arranged in a spaced-apart, substantially parallel, overlying array, and a spacer provided between adjacent baffle units to maintain them in spaced-apart relationship.

**Patentansprüche**

1. Flüssigkeitstank (5, 9), der in der Lage ist, einen hydraulischen Staudruck in der Flüssigkeit abzuleiten, der eine Folge einer Stoßwelle ist, die durch Aufschlag eines Geschosses auf eine äußere Oberfläche (6, 10) des Tanks verursacht wurde, **dadurch gekennzeichnet, dass** der Tank im Inneren einen Aufbau aus mehreren Prallplatteneinheiten (1) aufweist, die im Tank im Abstand zueinander im Wesentlichen parallel übereinanderliegend angeordnet sind, wobei jede Prallplatteneinheit wenigstens zwei im Abstand zueinander angeordnete Wände (2) aufweist, die dazwischen einen Hohlraum (3) definieren, der ein kompressibles, gasförmiges Material enthält, wobei die Wände (2) jeder Prallplatteneinheit ausreichend fest sind, um das gasförmige Material aufzunehmen und dem hydrostatischen Druck der im Tank im Betrieb befindlichen Flüssigkeit zu widerstehen und die Wände im Abstand zueinander liegen, um ein Hohlraumvolumen derart zu schaffen, dass im Betrieb, wenn der Tank durch ein Geschoss getroffen wird, die Energie der resultierenden Stoßwelle durch Expansion der Flüssigkeit in den Raum absorbiert wird, der durch Kompression der Prallplatteneinheit (1) erzeugt wird, so dass eine durch Kompression der Flüssigkeit im Tank erzeugte Stoßwelle oder mehrere Stoßwellen, die von einem Aufschlag eines Geschosses auf die äußere Oberfläche des Tank herrühren, auf wenigstens eine der Außenwände (2) einer jeden Prallplatteneinheit (1) auftreffen und derart, dass eine Stoßwelle oder Stoßwellen mit der oder jeder Prallplatteneinheit (1) zusammenwirken, bevor die Stoßwellen auf die äußeren Oberflächen des Tanks auftreffen, wobei das gasförmige Material eine Dichte besitzt, die genügend von der Dichte der Flüssigkeit im Tank unterschieden ist, um eine im Wesentlichen totale Reflexion der Stoßwelle oder der Stoßwellen, die innerhalb der oder jeder Prallplatteneinheit auftreffen, zu bewirken.

2. Tank nach Anspruch 1, bei welchem die Außenwände (2) einer jeden Prallplatteneinheit (1) aus Polymermaterial bestehen.

3. Tank nach einem der Ansprüche 1 und 2 mit einer Honigwabenstruktur (4), die in dem wenigstens einen Hohlraum enthalten ist und diesen unterteilt.

4. Tank nach einem der Ansprüche 1 bis 3, bei welchem das benutzte Gas oder das gasförmige Material Luft ist.

**5.** Tank nach einem der Ansprüche 1 bis 4, bei welchem im Betrieb die im Tank (5, 9) enthaltene Flüssigkeit entweder Wasser oder flüssiger Petroleum-Brennstoff ist.

**6.** Tank nach einem der Ansprüche 1 bis 5, bei welchem das gesamte Hohlraumvolumen einer jeden Prallplatteneinheit (1) im, Tank bis zu 10 Volumenprozent des Tankvolumens beträgt.

**7.** Prallplatteneinheit (1) zur Verminderung der hydraulischen Staudrücke in einer Flüssigkeit in einem Tank (5, 9), wenn die Prallplatteneinheit (1) in der Flüssigkeit des Tanks (5, 9) angeordnet wird, wobei der hydraulische Staudruck vom Aufschlag eines Geschosses auf eine äußere Oberfläche des Tanks herrührt, **dadurch gekennzeichnet, dass** die Prallplatteneinheit (1) wenigstens zwei äußere gleiche Wände (2) aufweist, die im Abstand zueinander durch eine Honigwabenstruktur gehalten werden, um dazwischen wenigstens einen Hohlraum (3) zu definieren und ein kompressibles Gas oder eine Gasmischung mit vermindertem oder atmospärischem oder erhöhtem Druck in den Hohlraum enthalten ist, wobei die Außenwände (2) ausreichend fest sind, um dem Druck des Gases oder des gasförmigen Materials in dem wenigstens einen Hohlraum (3) widerstehen zu können und um dem hydrostatischen Druck der Flüssigkeit im Tank widerstehen zu können, wenn die Prallplatteneinheit (1) in der Flüssigkeit im Tank eingesetzt ist, wobei die Außenwände (2) genügend weit beabstandet sind, um den wenigstens einen Hohlraum (3) zu schaffen, der ausreicht, damit eine Stoßwelle oder Stoßwellen, die in der Flüssigkeit durch Aufschlag eines Geschosses auf der äußeren Oberfläche des Tanks und daher auf die Flüssigkeit herrühren, durch Expansion der komprimierten Flüssigkeit in dem Hohlraumvolumen vermindert werden, wodurch der hydraulische Staudruck in der Flüssigkeit verringert wird und wobei das Gas oder die gasförmige Mischung eine Dichte aufweist, die genügend von der Dichte der Flüssigkeit unterschieden ist, um eine im Wesentlichen totale Reflexion der Stoßwelle oder der Stoßwellen, die innerhalb der Prallplatteneinheit (1) auf diese auftreffen, zu bewirken und dadurch den hydraulischen Staudruck auf die Flüssigkeit verringern.

**8.** Prallplatteneinheit nach Anspruch 7, bei welcher die Außenwände (2) der Prallplatteneinheit aus einem Polymermaterial bestehen.

**9.** Prallplatteneinheit nach einem der Ansprüche 7 und 8, bei welcher das benutzte Gas oder gasförmige Material Luft ist.

**10.** Prallplattenstruktur zur Verminderung des hydraulischen Staudrucks in der Flüssigkeit in einem Tank (5, 9) bei Montage der Prallplattenstruktur in der Flüssigkeit des Tanks, wobei der hydraulische Staudruck vom Aufschlag eines Geschosses auf eine äußere Oberfläche des Tanks herrührt, wobei die Prallplattenstruktur wenigstens eine Prallplatteneinheit (1) gemäß einem der Ansprüche 1 bis 9 und eine Lageranordnung (7) aufweist, um die wenigstens eine Prallplatteneinheit in einem Abstand relativ zur Wand des Tanks zu lagern.

**11.** Prallplattenstruktur nach Anspruch 10 mit mehreren Prallplatteneinheiten (1), die im Abstand im Wesentlichen parallel übereinander angeordnet sind, wobei ein Abstandshalter zwischen benachbarten Prallplatteneinheiten vorgesehen ist, um diese in der vorgegebenen Abstandsbeziehung zu halten.

**Revendications**

**1.** Un réservoir (5, 9) destiné à contenir un liquide, le réservoir étant capable de défléchir la pression dynamique hydraulique dans le liquide résultant d'une onde de choc causée par l'impact d'un projectile avec une surface externe (6, 10) du réservoir, **caractérisé en ce qu'**il est fourni dans le réservoir un ensemble comportant une pluralité d'unités de déflecteurs (1) montées dans le réservoir dans une relation espacée de superposition substantiellement parallèle, chaque unité de déflecteur comprenant au moins deux parois espacées (2) définissant une cavité (3) entre celles-ci, laquelle cavité contient une matière gazeuse compressible, les parois (2) de chaque unité de déflecteur étant suffisamment solides pour contenir la matière gazeuse et pour résister à la pression hydrostatique du liquide contenu dans le réservoir lors de l'utilisation, et étant espacées pour définir un volume de cavité de telle sorte que, lors de l'utilisation, lorsque le réservoir subit l'impact d'un projectile, l'énergie de l'onde de choc résultante est absorbée par expansion du liquide dans l'espace créé par la compression d'une unité de déflecteur (1) afin qu'une onde de choc ou des ondes de choc résultant de la compression du liquide, lorsque dans le réservoir, résultant d'un impact d'un projectile sur une surface externe du réservoir, heurte(nt) au moins une des parois extérieures (2) de la ou de chaque unité de déflecteur (1), et afin qu'une onde de choc ou des ondes de choc interagisse(nt) avec la ou chaque unité de déflecteur (1) avant de heurter les surfaces externes de réservoir, et la matière gazeuse ayant une densité suffisamment différente de la densité du liquide dans le réservoir pour fournir une réflexion substantiellement totale dans la ou chaque unité de déflecteur de l'onde de choc ou des ondes de choc heurtant celle-ci.

2. Un réservoir selon la revendication 1, dans lequel les parois extérieures (2) de chaque unité de déflecteur (1) sont faites en une matière polymère.

3. Un réservoir selon n'importe laquelle des revendications 1 et 2, comprenant une structure en nid d'abeille (4) contenue dans et subdivisant cette au moins une cavité.

4. Un réservoir selon n'importe laquelle des revendications 1 à 3, dans lequel le gaz ou la matière gazeuse utilisé(e) est l'air.

5. Un réservoir selon n'importe lesquelles des revendications 1 à 4, dans lequel lors de l'utilisation le liquide contenu dans le réservoir (5, 9) est soit de l'eau, soit du combustible de pétrole liquéfié.

6. Un réservoir selon n'importe laquelle des revendications 1 à 5, dans lequel le volume de cavité total de chaque unité de déflecteur (1) dans le réservoir fait jusqu'à 10 % en volume du volume de réservoir.

7. Une unité de déflecteur (1) destinée à réduire les pressions dynamiques hydrauliques dans un liquide dans un réservoir (5, 9), lorsque l'unité de déflecteur (1) est située dans le liquide dans le réservoir (5, 9), où la pression dynamique hydraulique résulte de l'impact d'un projectile avec une surface externe du réservoir, l'unité de déflecteur (1) étant **caractérisée par** au moins deux parois extérieures analogues (2) qui sont tenues dans une relation espacée par une structure en nid d'abeille afin de définir entre celles-ci au moins une cavité (3), et un gaz ou mélange gazeux compressible à pression réduite, atmosphérique ou augmentée, contenu dans la cavité, lesdites parois extérieures (2) étant suffisamment solides pour supporter la pression du gaz ou mélange gazeux contenu dans cette au moins une cavité (3) et pour résister à la pression hydrostatique du liquide dans un réservoir, lorsque l'unité de déflecteur (1) est située dans le liquide dans le réservoir, les parois extérieures (2) étant espacées d'une quantité suffisante pour fournir à cette au moins une cavité (3) un volume suffisant pour permettre à une onde de choc ou des ondes de choc dans le liquide, résultant de la compression du liquide par impact d'un projectile sur la surface externe du réservoir et de ce fait sur le liquide, d'être réduite(s) par expansion du liquide comprimé dans le volume de cavité pour réduire de ce fait la pression dynamique hydraulique dans le liquide, et le gaz ou mélange gazeux ayant une densité suffisamment différente de la densité du liquide pour fournir une réflexion substantiellement totale dans l'unité de déflecteur (1) de l'onde de choc ou des ondes de choc heurtant l'unité de déflecteur (1), pour réduire de ce fait la pression dynamique hydraulique dans le liquide.

8. Une unité de déflecteur selon la revendication 7, dans laquelle les parois extérieures (2) de l'unité de déflecteur sont faites en une matière polymère.

9. Une unité de déflecteur selon l'une ou l'autre des revendications 7 et 8, dans laquelle le gaz ou les matières gazeuses utitisé(es) est/sont de l'air.

10. Une structure à déflecteur destinée à réduire la pression dynamique hydraulique dans un liquide dans un réservoir (5, 9), lorsque la structure à déflecteur est montée dans le liquide dans le réservoir, où la pression dynamique hydraulique résulte de l'impact d'un projectile avec une surface externe du réservoir, la structure à déflecteur comportant au moins une unité de déflecteur (1) selon n'importe laquelle des revendications 7 à 9, et un bâti (7) destiné à monter cette dite au moins une unité de déflecteur en relation espacée avec une paroi dudit réservoir.

11. Une structure de déflecteur selon la revendication 10 et comportant une pluralité desdites unités de déflecteurs (1), agencées dans un ensemble de superpositions, espacées, substantiellement parallèles, et une pièce d'espacement fournie entre des unités de déflecteurs adjacentes pour les maintenir dans une relation espacée.

# Fig.1.

# Fig.2.

# FIG. 3

# Fig.4.

press1
kbar

Fig.6.

Time (μs)

press3
kbar

Fig.7.

Time (μs)

Fig.5.

press1

## Fig.8.

press2

## Fig.9.

# Fig.10.

## Fig.11.

## Fig.12.